# EUROPÄISCHE PATENTSCHRIFT

(11) **EP 2 884 049 B1**
(45) Veröffentlichungstag und Bekanntmachung des Hinweises auf die Patenterteilung: **28.06.2017**
(21) Anmeldenummer: 13196987.5
(22) Anmeldetag: 12.12.2013
(51) Int. Cl.: F01D 5/22, F01D 11/00, F01D 5/30

(54) **Gasturbinen-Laufschaufelanordnung mit einem Dämpfungselement**
Gas turbine rotor blade assembly with a damper
Agencement d'aubes mobiles de turbines à gaz avec une tige d'amortissement

(43) Veröffentlichungstag der Anmeldung: 17.06.2015
(73) Patentinhaber: MTU Aero Engines AG, 80995 München (DE)
(72) Erfinder: Wöhler, Marcus, 82266 Inning am Ammersee (DE); Pernleitner, Martin, 85221 Dachau (DE)

(56) Entgegenhaltungen:
- EP-A1- 0 709 549
- WO-A2-2013/154657
- US-A- 5 415 526

## Beschreibung

Die vorliegende Erfindung betrifft eine Laufschaufelanordnung für eine Gasturbine, eine Gasturbine, insbesondere eine Flugtriebwerk-Gasturbine, mit einer solchen Laufschaufelanordnung sowie eine Verfahren zur Montage einer solchen Laufschaufelanordnung.

Aus der WO 2013/154657 A2 ist eine Laufschaufelanordnung bekannt, bei der zwischen benachbarten Laufschaufeln ein bügelartiges Dämpfungselement angeordnet ist. Das Dämpfungselement ist mit seinen Bügelenden auf Axialflanschen in Umfangsrichtung beweglich gelagert, um dissipativ Schaufelvibrationen zu dämpfen. Eine Sicherungsnase greift radial in eine Aussparung in einer Mantelfläche des Dämpfungselements ein Dokumente EP 0709549 A1 und US 5415526 offenbaren auch bekannte Laufschaufelanordnungen.

Eine Aufgabe einer Ausführung der vorliegenden Erfindung ist es, eine Laufschaufelanordnung für eine Gasturbine zur Verfügung zu stellen.

Diese Aufgabe wird durch eine Laufschaufelanordnung mit den Merkmalen des Anspruchs 1 gelöst. Ansprüche 11, 12 stellen eine Gasturbine mit einer erfindungsgemäßen Laufschaufelanordnung bzw. ein Verfahren zur Montage einer erfindungsgemäßen Laufschaufelanordnung unter Schutz. Vorteilhafte Ausführungsformen der Erfindung sind Gegenstand der Unteransprüche.

Nach einem Aspekt der vorliegenden Erfindung weist eine Laufschaufelanordnung für eine Gasturbine, insbesondere eine Verdichter- oder Turbinenstufe einer Flugtriebwerk-Gasturbine, insbesondere eine Laufschaufelanordnung einer Gasturbine, insbesondere einer Verdichter- oder Turbinenstufe einer Flugtriebwerk-Gasturbine, wenigstens ein erstes Laufschaufelelement und ein diesem in Umfangsrichtung der Gasturbine benachbartes zweites Laufschaufelelement auf.

Die benachbarten Laufschaufelelemente weisen jeweils ein oder mehrere Schaufelblätter zur Strömungsumlenkung einer zu verdichtenden bzw. entspannenden Luft- bzw. Abgasströmung sowie einen Schaufelfuß zur Befestigung an einem Rotor der Gasturbine auf. Der Schaufelfuß kann lösbar oder unlösbar an dem Rotor befestigt sein bzw. werden, insbesondere formschlüssig, vorzugsweise mittels einer oder mehrerer Hinterschneidungen, insbesondere eines Tannenbaumprofils. In einer Ausführung ist der Rotor eine Rotorscheibe.

Die benachbarten Laufschaufelelemente weisen einander in Umfangsrichtung der Gasturbine zugewandte Schaufelhalsaussparungen auf, die zwischen Schaufelblatt und Schaufelfuß angeordnet sind. In einer Ausführung ist eine Schaufelhalsaussparung in Axialrichtung der Gasturbine durch axiale Stirnwände begrenzt, an deren von der Schaufelhalsaussparung abgewandten Seite eine Schaufelplattform ausgebildet sein kann. In Radialrichtung der Gasturbine nach außen ist eine Schaufelhalsaussparung in einer Ausführung durch eine radiale Stirnwand begrenzt, von deren von der Schaufelhalsaussparung abgewandten Seite das Schaufelblatt bzw. die Schaufelblätter des Laufschaufelelements radial abstehen. In Radialrichtung der Gasturbine nach innen zum Schaufelfuß hin kann die Schaufelhalsaussparung in einer Ausführung offen oder, wenigstens teilweise geschlossen sein. In Umfangsrichtung der Gasturbine zu dem benachbarten Laufschaufelelement hin ist die Schaufelhalsaussparung in einer Ausführung ganz oder teilweise offen und in Umfangsrichtung der Gasturbine von dem benachbarten Laufschaufelelement weg ist sie durch eine Stirnfläche begrenzt; sie wird daher ohne Beschränkung der Allgemeinheit als (Schaufelhals)Aussparung bezeichnet.

In den einander in Umfangsrichtung der Gasturbine zugewandten Schaufelhalsaussparungen ist wenigstens ein gemeinsames Dämpfungselement in Radial- und/oder Umfangsrichtung der Gastrubine beweglich gelagert. Bei betriebsbedingten Vibrationen der Laufschaufelanordnung kann dieses in einer Ausführung, insbesondere in Umfangsrichtung, Bewegungen ausführen und so die Vibrationen dissipativ dämpfen. Ein in Radialrichtung der Gasturbine beweglich gelagertes Dämpfungselement wird im Betrieb durch die Zentrifualkraft nach außen getrieben und prägt so eine Normalkraft auf, die den dissipativen Reibschluss bewirkt.

In einer Ausführung weist die Laufschaufelanordnung mehr als zwei in Umfangsrichtung der Gasturbine beabstandete Laufschaufelelemente auf, die an demselben Rotor befestigbar, insbesondere befestigt sind bzw. werden. Dann können zwischen zwei oder mehr, insbesondere allen benachbarten Laufschaufelelementen in nachfolgend beschriebener Weise je ein oder mehrere Dämpfungselemente angeordnet sein bzw. werden. Entsprechend kann in einer Ausführung in Umfangsrichtung der Gasturbine vor und hinter einem zweiten Laufschaufelelement ein diesem benachbartes erstes Laufschaufelelement angeordnet sein, wobei zwischen jedem dieser ersten Laufschaufelelemente und dem zweiten Laufschaufelelement jeweils ein oder mehrere Dämpfungselemente in nachfolgend beschriebener Weise angeordnet sind bzw. werden.

Nach einem Aspekt der vorliegenden Erfindung weist eine erste Stirnseite des Dämpfungselements eine erste Lageraussparung auf, in die ein erster Lagerstift eingreift, der an, insbesondere in, der Schaufelhalsaussparung des ersten Laufschaufelelements angeordnet ist, und eine in Umfangsrichtung der Gasturbine gegenüberliegende zweite Stirnseite des Dämpfungselements eine zweite Lageraussparung, in die ein zweiter Lagerstift eingreift, der an, insbesondere in, der Schaufelhalsaussparung des zweiten Laufschaufelelements angeordnet ist.

Insbesondere umgreift in einer Ausführung das Dämpfungselement die Lagerstifte mit seinen Lageraussparungen wenigstens teilweise. Hierdurch kann in einer Ausführung eine, insbesondere gewichts-, festigkeits-, fertigungs- und/oder montagetechnisch und/oder thermisch und/oder kinetisch, vorteilhafte Lagerung dargestellt werden.

In einer Ausführung sind die erste und zweite Lageraussparung miteinander zu einer Durchgangsöffnung verbunden. Dies kann insbesondere fertigungs- und/oder toleranztechnisch vorteilhaft sein.

In einer anderen Ausführung sind die erste und zweite Lageraussparung voneinander sacklochartig durch eine Zwischenwand des Dämpfungselements voneinander getrennt, die in einer Ausführung eine Bewegung des Dämpfungselements auf einem Lagerstift in dessen Eingriffsrichtung anschlagartig begrenzen kann. Hierdurch können in einer Ausführung Vibrationen vorteilhaft gedämpft werden, insbesondere mehrere unterschiedliche Schwingungsmoden gedämpft werden.

In einer Ausführung weist das Dämpfungselement in einem Querschnitt durch den ersten und/oder zweiten Lagerstift senkrecht zu einer Längsachse dieses Lagerstiftes einen geschlossenen Außenumfang auf. Ein solcher geschlossener, insbesondere O-förmiger, Querschnitt kann insbesondere festigkeitstechnisch vorteilhaft sein. In einer Ausführung weist das Dämpfungselement ein O-Profil mit zwei zu einer Durchgangsöffnung verbundenen Aussparungen auf, die einen geschlossenen Außenumfang aufweisen.

In einer anderen Ausführung weist das Dämpfungselement in einem Querschnitt durch den ersten und/oder zweiten Lagerstift senkrecht zu einer Längsachse dieses Lagerstiftes einen Radialschlitz auf, der sich von einer Lageraussparung bis zu einem Außenumfang erstreckt, insbesondere wenigstens im Wesentlichen in Richtung der Längsachse des ersten und/oder zweiten Lagerstiftes. Ein solcher geschlitzter Querschnitt kann insbesondere zur Kompensation von Fertigungs- und/oder Montagetoleranzen und/oder thermischen Verformungen vorteilhaft sein.

Der Radialschlitz kann in einer Ausführung in Radialrichtung der Gasturbine außen bzw. schaufelblattseitig angeordnet sein. Hierdurch kann insbesondere vorteilhaft eine geschlossene Betriebskontaktfläche zwischen einer Lageraussparung und dem in diese eingreifenden Lagerstift zur Verfügung gestellt werden.

In einer anderen Ausführung kann der Radialschlitz in Radialrichtung der Gasturbine innen bzw. schaufelfußseitig angeordnet sein. Hierdurch kann insbesondere vorteilhaft eine geschlossene Betriebskontaktfläche zwischen einer schaufelblattseitigen Außenseite des Dämpfungselements und einer dieser gegenüberliegenden Innenwandung einer Schaufelhalsaussparung zur Verfügung gestellt werden.

Insbesondere in diesem Fall kann in einer Ausführung eine minimale Schlitzweite größer oder gleich einer maximalen Querschnittsbreite der in die Lageraussparungen eingreifenden Lagerstifte sein. Hierdurch kann in einer Ausführung vorteilhaft ein größeres Radialspiel zur Verfügung gestellt, Gewicht gespart und/oder der Montageaufwand reduziert werden. Das Dämpfungselement kann insbesondere wenigstens abschnittsweise einen, wenigstens im Wesentlichen, U-förmigen Querschnitt aufweisen, wobei die beiden Schenkel des U-förmigen Querschnitts den Schlitz sowie die Lageraussparung(en) definieren. In einer Ausführung weist das Dämpfungselement ein U-Profil mit zwei zu einer Durchgangsöffnung verbundenen Aussparungen auf, die einen in Längs-bzw. Erstreckungsrichtung der Durchgangsöffnung geschlitzten Außenumfang aufweisen.

Gleichermaßen kann in einer anderen Ausführung eine maximale Schlitzweite kleiner sein als eine maximale Querschnittsbreite wenigstens eines der in die Lageraussparungen eingreifenden Lagerstifte. Hierdurch kann in einer Ausführung vorteilhaft ein Radialspiel formschlüssig begrenzt und/oder das Dämpfungselement verliergesichert sein bzw. werden. Das Dämpfungselement kann insbesondere, wenigstens abschnittsweise, einen, wenigstens im Wesentlichen, C-förmigen Querschnitt aufweisen, wobei die beiden Schenkel des C-förmigen Querschnitts die Lageraussparung(en) definieren und die endseitigen, einander zugewandten Nasen der Schenkel den Schlitz. In einer Ausführung weist das Dämpfungselement ein C-Profil mit zwei zu einer Durchgangsöffnung verbundenen Aussparungen auf, die einen in Längs-bzw. Erstreckungsrichtung der Durchgangsöffnung geschlitzten Außenumfang aufweisen.

Zusätzlich oder alternativ zu einem schaufelblatt- oder -fußseitigen Radialschlitz kann das Dämpfungselement in einem Querschnitt senkrecht zu einer Längsachse des ersten und/oder zweiten Lagerstiftes einen Axialschlitz aufweisen.

In einer Ausführung kann das Dämpfungselement in einem Querschnitt senkrecht zu einer Längsachse des ersten und/oder zweiten Lagerstiftes ein, wenigstens im Wesentlichen, L- oder T-förmiges Profil aufweisen bzw. L- oder T-förmig ausgebildet sein, wobei die beiden, insbesondere wenigstens im Wesentlichen senkrecht zueinander ausgerichteten, Schenkel des L- bzw. T-Profils bzw. der von diesen aufgespannte Innenwinkel die Lageraussparung(en) definieren. Entsprechend wird auch ein Innenwinkel eines L-förmigen, T-förmigen oder ähnlichen Profils verallgemeinernd als Lageraussparung im Sinne der vorliegenden Erfindung verstanden. Eine Lageraussparung im Sinne der vorliegenden Erfindung kann somit längs eines Umfangs eines in diese eingreifenden Lagerstiftes geschlossen und insbesondere durch ein O-Profil ausgebildet sein. Gleichermaßen kann eine Lageraussparung im Sinne der vorliegenden Erfindung durch einen Schlitz, insbesondere einen Radialschlitz, zu einer Außenseite des Dämpfungselements hin offen bzw. an drei Umfangsseiten geschlossen und insbesondere durch ein U- oder C-Profil ausgebildet sein. Gleichermaßen kann eine Lageraussparung im Sinne der vorliegenden Erfindung in Radial- und Axialrichtung der Gasturbine offen bzw. an zwei Umfangsseiten geschlossen und insbesondere durch ein L- oder T-Profil ausgebildet sein.

In einer Ausführung ist das Dämpfungselement in Axialrichtung der Gasturbine durch einen Sicherungsstift festgelegt, der an, insbesondere in der Schaufelhalsaussparung des ersten oder zweiten Laufschaufelelements angeordnet ist. Gegensinnig hierzu kann das Dämpfungselement durch einen weiteren Sicherungsstift festgelegt sein, der an, insbesondere in der Schaufelhalsaussparung desselben oder des anderen Laufschaufelelements angeordnet ist. Gleichermaßen kann das Dämpfungselement auf einer dem Sicherungsstift gegenüberliegenden Seite auch durch eine Innenwandung der ersten und/oder zweiten Schaufelhalsaussparung oder der ersten und/oder zweiten Lageraussparung festgelegt sein. Unter einem Festlegen wird vorliegend insbesondere eine formschlüssige Sicherung mit Spiel, aber auch eine, wenigstens im Wesentlichen, spielfreie Fixierung verstanden. Zusätzlich oder alternativ zu einer Festlegung in Axialrichtung der Gasturbine kann ein Sicherungsstift das Dämpfungselement auf dem ersten und/oder zweiten Lagerstift auch gegen eine Verdrehung um dessen Längserstreckung sichern.

Der erste Lagerstift und der zweite Lagerstift, in einer Weiterbildung auch ein vorstehend erläuterte Sicherungsstift, können in einer Ausführung, wenigstens im Wesentlichen, parallel zueinander sein. Dabei können der erste Lagerstift und der zweite Lagerstift in Umfangs- und/oder Radialrichtung der Gasturbine gegeneinander versetzt sein, insbesondere, um eine kippstabile Lagerung darzustellen, oder, wenigstens im Wesentlichen, miteinander fluchten, insbesondere, um ein Bewegungsspiel einer von den fluchtenden Lagerstiften durchgriffenen Durchgangsöffnung zu vergrößern.

In einer Ausführung ist das Dämpfungselement in Radialrichtung der Gasturbine mit einem Radialspiel auf dem ersten und/oder zweiten Lagerstift gelagert, das größer ist als ein Radialspiel zwischen einer schaufelblattseitigen Außenseite des Dämpfungselements und einer gegenüberliegenden Innenwandung der ersten und/oder zweiten Schaufelhalsaussparung. Auf diese Weise bilden die schaufelblattseitige Außenseite des Dämpfungselements und die gegenüberliegende Innenwandung der ersten und/oder zweiten Schaufelhalsaussparung, die einander infolge des kleineren Radialspiels bei einer zentrifualkraftbedingten Verschiebung des Dämpfungselements kontaktieren, Betriebskontaktflächen, in denen Dämpfungselement und Schaufelblattelemente reibschlüssig Vibrationen dämpfen.

In einer anderen Ausführung ist das Dämpfungselement in Radialrichtung der Gasturbine mit einem Radialspiel auf dem ersten und/oder zweiten Lagerstift gelagert, das kleiner ist als ein Radialspiel zwischen einer schaufelblattseitigen Außenseite des Dämpfungselements und einer gegenüberliegenden Innenwandung der ersten und/oder zweiten Schaufelhalsaussparung. Auf diese Weise bilden eine in Radialrichtung der Gasturbine innere Außenseite des ersten und/oder zweiten Lagerstifts und eine dieser gegenüberliegenden Innenwandung der Lageraussparung, die einander infolge des kleineren Radialspiels bei einer zentrifugalkraftbedingten Verschiebung des Dämpfungselements kontaktieren, Betriebskontaktflächen, in denen Dämpfungselement und Schaufelblattelemente reibschlüssig Vibrationen dämpfen.

In einer Ausführung steigt eine Betriebskontaktfläche der ersten Lageraussparung zum Kontaktieren einer Betriebskontaktfläche des in diese Lageraussparung eingreifenden ersten Lagerstiftes in dessen Eingriffsrichtung gesehen in Radialrichtung der Gasturbine nach außen, insbesondere linear, an. Zusätzlich oder alternativ kann eine Betriebskontaktfläche der zweiten Lageraussparung zum Kontaktieren einer Betriebskontaktfläche des in diese Lageraussparung eingreifenden zweiten Lagerstiftes in dessen Eingriffsrichtung gesehen in Radialrichtung der Gasturbine nach außen, insbesondere linear, ansteigen, insbesondere symmetrisch zu der Betriebskontaktfläche der ersten Lageraussparung. Auf diese Weise kann in einer Ausführung vorteilhaft eine Selbstzentrierung erreicht werden. In einer Ausführung ist eine Betriebskontaktfläche der ersten und/oder zweiten Lageraussparung zum Kontaktieren einer Betriebskontaktfläche des in diese Lageraussparung eingreifenden ersten bzw. zweiten Lagerstiftes und/oder die Betriebskontaktfläche des in diese Lageraussparung eingreifenden ersten bzw. zweiten Lagerstiftes ballig ausgebildet. Hierdurch kann vorteilhaft ein Linienkontakt zwischen dem Lagerstift und dem Dämpfungselement dargestellt werden.

Einer oder mehrere der Lager- und/oder Sicherungsstifte können in einer Ausführung freistehend ausgebildet sein. Hierunter wird vorliegend insbesondere verstanden, dass der Stift in einem wenigstens Querschnitt senkrecht zu seiner Längs- bzw. Erstreckungsrichtung, vorzugsweise wenigstens im Wesentlichen über seine gesamte Längserstreckung, einen allseitig freien Außenumfang aufweist. Dies kann insbesondere thermisch, montage- und/oder fertigungstechnisch vorteilhaft sein.

Zusätzlich oder alternativ können einer oder mehrere der Lager- und/oder Sicherungsstifte in einer Ausführung integral mit der Schaufelhalsaussparung ausgebildet sein. Dies kann insbesondere festigkeits- und/oder fertigungstechnisch vorteilhaft sein.

Zusätzlich oder alternativ können einer oder mehrere der Lager- und/oder Sicherungsstifte in einer Ausführung in einem Radius in die Schaufelhalsaussparung übergehen. Dies kann ebenfalls insbesondere festigkeits- und/oder fertigungstechnisch vorteilhaft sein.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Draufsicht in Umfangsrichtung auf ein Laufschaufelelement einer Laufschaufelanordnung einer Gasturbine nach einer Ausführung der vorliegenden Erfindung;
- Fig. 2: einen Schnitt längs der Linie II-II in Fig. 1;
- Fig. 3: einen Schnitt eines Laufschaufelelements einer Laufschaufelanordnung einer Gasturbine nach einer weiteren Ausführung der vorliegenden Erfindung in Fig. 2 entsprechender Darstellung;
- Fig. 4: eine Draufsicht in Umfangsrichtung auf ein Laufschaufelelement einer Laufschaufelanordnung einer Gasturbine nach einer weiteren Ausführung der vorliegenden Erfindung in Fig. 1 entsprechender Darstellung;
- Fig. 5: eine perspektivische Ansicht des Laufschaufelelements der Fig. 4;
- Fig. 6: eine perspektivische Ansicht eines dem Laufschaufelelement der Fig. 5 benachbarten Laufschaufelelements;
- Fig. 7: eine Draufsicht in Umfangsrichtung auf ein Laufschaufelelement einer Laufschaufelanordnung einer Gasturbine nach einer weiteren Ausführung der vorliegenden Erfindung in Fig. 1 entsprechender Darstellung;
- Fig. 8: eine perspektivische Ansicht des Laufschaufelelements der Fig. 7; und
- Fig. 9: eine perspektivische Ansicht eines dem Laufschaufelelement der Fig. 8 benachbarten Laufschaufelelements.

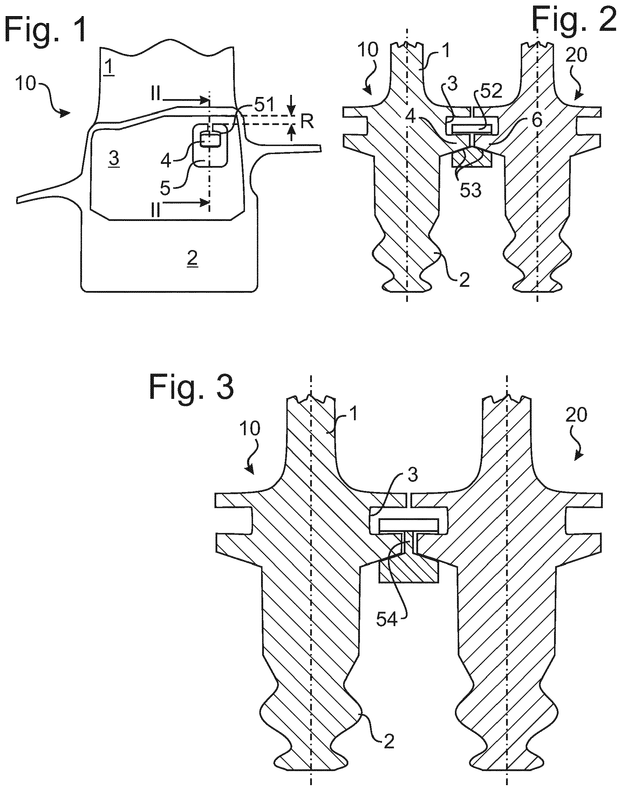

Fig. 1 zeigt eine Draufsicht in Umfangsrichtung auf ein erstes Laufschaufelelement 10 einer Laufschaufelanordnung einer Gasturbine nach einer Ausführung der vorliegenden Erfindung, Fig. 2 einen Schnitt längs der Linie II-II in Fig. 1 durch dieses Laufschaufelelement sowie ein in Umfangsrichtung benachbartes zweites Laufschaufelelement 20 der Laufschaufelanordnung.

Die benachbarten Laufschaufelelemente weisen jeweils ein Schaufelblatt 1 zur Strömungsumlenkung, einen Schaufelfuß 2 zur Befestigung an einer Rotorscheibe (nicht dargestellt), sowie einander zugewandte, zwischen Schaufelblatt und Schaufelfuß angeordnete Schaufelhalsaussparungen 3 auf. Zur übersichtlicheren Darstellung sind diese nur für das erste Laufschaufelelement mit Bezugszeichen versehen, das zweite Laufschaufelelement ist, wenigstens im Wesentlichen, baugleich, so dass auf die Beschreibung des ersten Laufschaufelelements Bezug genommen wird.

In den einander zugewandten Schaufelhalsaussparungen ist ein gemeinsames Dämpfungselement 5 beweglich gelagert. Hierzu weist eine erste Stirnseite des Dämpfungselements, auf die man in Fig. 1 blickt, eine erste Lageraussparung 51 auf, in die ein erster Lagerstift 4 eingreift, der an der Schaufelhalsaussparung des ersten Laufschaufelelements angeordnet ist. Eine in Umfangsrichtung der Gasturbine gegenüberliegende (rechts in Fig. 2) zweite Stirnseite des Dämpfungselements weist spiegelbildlich eine zweite Lageraussparung auf, in die ein zweiter Lagerstift 6 eingreift, der an der Schaufelhalsaussparung des zweiten Laufschaufelelements angeordnet ist und mit dem ersten Lagerstift innerhalb der Toleranz fluchtet.

Wie insbesondere im Schnitt der Fig. 2 erkennbar, sind die erste und zweite Lageraussparung miteinander zu einer Durchgangsöffnung verbunden und daher durch dasselbe Bezugszeichen bezeichnet.

Wie insbesondere in der Draufsicht der Fig. 1 erkennbar, ist das Dämpfungselement C-förmig ausgebildet und weist in zur Zeichenebene der Fig. 1 parallelen Querschnitten senkrecht zu einer Längsachse des ersten und zweiten Lagerstiftes (horizontal in Fig. 2) einen Radialschlitz 52 auf, welcher schaufelblattseitig (oben in Fig. 1, 2) angeordnet ist. Seine Schlitzweite ist kleiner als die maximale Querschnittsbreite der in die Lageraussparungen eingreifenden Lagerstifte, so dass das Dämpfungselement in Radialrichtung der Gasturbine (von unten nach oben in Fig. 1, 2) beidsinnig festgelegt ist.

Das Dämpfungselement ist in Radialrichtung der Gasturbine mit einem Radialspiel auf dem ersten und zweiten Lagerstift gelagert, das kleiner ist als ein Radialspiel R zwischen einer schaufelblattseitigen Außenseite des Dämpfungselements (oben in Fig. 1, 2) und einer gegenüberliegenden Innenwandung der ersten und zweiten Schaufelhalsaussparung. Dadurch bildet die in Fig. 1, 2 untere Wandung der ersten und zweiten Lageraussparung jeweils eine Betriebskontaktfläche 53 zum Kontaktieren einer Betriebskontaktfläche des in diese Lageraussparung eingreifenden Lagerstiftes, die im Ausführungsbeispiel ballig ausgebildet ist, um einen Linienkontakt darzustellen.

Wie insbesondere im Schnitt der Fig. 2 erkennbar, steigt diese Betriebskontaktfläche 53 der ersten Lageraussparung (links in Fig. 2) in deren Eingriffsrichtung (von links nach rechts in Fig. 2) gesehen in Radialrichtung der Gasturbine nach außen (nach oben in Fig. 2) linear an. Spiegelbildlich hierzu steigt die Betriebskontaktfläche 53 der zweiten Lageraussparung (rechts in Fig. 2) in deren Eingriffsrichtung (von rechts nach links in Fig. 2) gesehen in Radialrichtung der Gasturbine nach außen (nach oben in Fig. 2) linear an.

Fig. 3 zeigt in Fig. 2 entsprechender Weise einen Schnitt durch eine Laufschaufelanordnung einer Gasturbine nach einer weiteren Ausführung der vorliegenden Erfindung. Einander entsprechende Merkmale sind durch identische Bezugszeichen bezeichnet, so dass nachfolgend nur auf Unterschiede eingegangen und im Übrigen auf die vorhergehende Beschreibung Bezug genommen wird.

In der Ausführung der Fig. 3 sind die erste und zweite Lageraussparung voneinander sacklochartig durch eine Zwischenwand 54 getrennt. Der erste und der zweite Lagerstift sind in dieser Ausführungsform in Umfangsrichtung kürzer als in der Ausführungsform der Fig. 1, 2 ausgebildet, so dass sie in die erste bzw. zweite sacklochartige Lageraussparung eingreifen können.

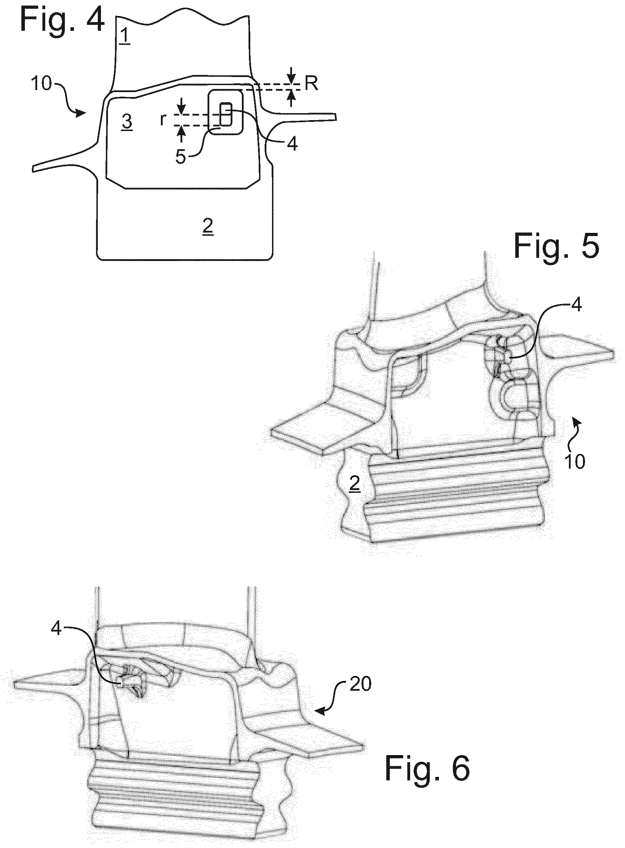

Fig. 4 zeigt in Fig. 1 entsprechender Weise eine Draufsicht auf ein erstes Laufschaufelelement einer Laufschaufelanordnung einer Gasturbine nach einer weiteren Ausführung der vorliegenden Erfindung. Einander entsprechende Merkmale sind durch identische Bezugszeichen bezeichnet, so dass nachfolgend nur auf Unterschiede eingegangen und im Übrigen auf die vorhergehende Beschreibung Bezug genommen wird.

In der Ausführung der Fig. 4 ist das Dämpfungselement 5 O-förmig ausgebildet und weist in zur Zeichenebene der Fig. 4 parallelen Querschnitten senkrecht zu einer Längsachse des ersten und zweiten Lagerstiftes einen geschlossenen Außenumfang auf.

In der Ausführung der Fig. 4 ist das Dämpfungselement in Radialrichtung der Gasturbine mit einem Radialspiel r auf dem ersten und zweiten Lagerstift gelagert, das größer ist als ein Radialspiel R zwischen einer schaufelblattseitigen Außenseite des Dämpfungselements und einer gegenüberliegenden Innenwandung der ersten und zweiten Schaufelhalsaussparung. Dadurch bildet in Fig. 4 diese schaufelblattseitige Außenseite des Dämpfungselements eine Betriebskontaktfläche zum Kontaktieren der gegenüberliegenden Innenwandung der ersten und zweiten Schaufelhalsaussparung, die somit die weitere Betriebskontaktfläche für den dissipativen Reibschluss zur Vibrationsdämpfung definiert.

Fig. 5 zeigt eine perspektivische Ansicht dieses Laufschaufelelements, Fig. 6 eine perspektivische Ansicht eines diesem ersten Laufschaufelelement benachbarten zweiten Laufschaufelelements 20, wobei zur Verdeutlichung das zwischen diesen angeordnete Dämpfungselement ausgeblendet ist.

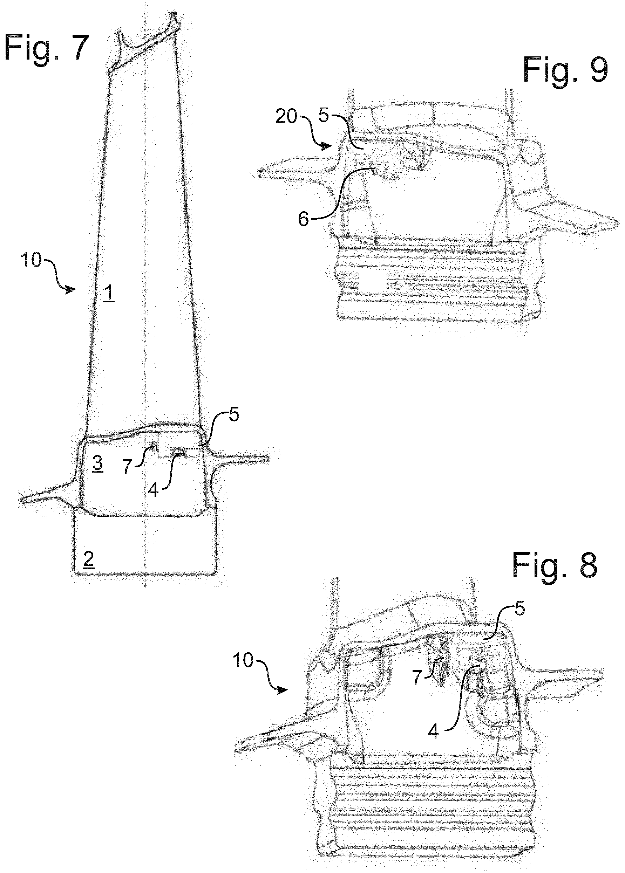

Fig. 7 zeigt in Fig. 1, 4 entsprechender Weise eine Draufsicht auf ein erstes Laufschaufelelement einer Laufschaufelanordnung einer Gasturbine nach einer weiteren Ausführung der vorliegenden Erfindung. Einander entsprechende Merkmale sind durch identische Bezugszeichen bezeichnet, so dass nachfolgend nur auf Unterschiede eingegangen und im Übrigen auf die vorhergehende Beschreibung Bezug genommen wird.

In der Ausführung der Fig. 7 ist das Dämpfungselement 5 U-förmig ausgebildet und weist in zur Zeichenebene der Fig. 7 parallelen Querschnitten senkrecht zu einer Längsachse des ersten und zweiten Lagerstiftes einen Radialschlitz auf, welcher schaufelfußseitig (unten in Fig. 7) angeordnet ist. Seine Schlitzweite ist größer als die maximale Querschnittsbreite der in die Lageraussparungen eingreifenden Lagerstifte.

In der Ausführung der Fig. 7 ist das Dämpfungselement in Axialrichtung der Gasturbine (horizontal in Fig. 7) durch einen Sicherungsstift 7 festgelegt, der an der Schaufelhalsaussparung des ersten Laufschaufelelements 10 angeordnet ist.

Das Dämpfungselement der Ausführung der Fig. 7 ist U-förmig ausgebildet, seine zu einer Durchgangsöffnung verbundenen Lageraussparungen entsprechend an drei Umfangsseiten (links, rechts, oben in Fig. 7) geschlossen. In einer Abwandlung können die Lageraussparungen auch an zwei Umfangsseiten offen, insbesondere durch den Innenwinkel eines L-Profils ausgebildet sein. Ein solches Dämpfungselement mit L-förmigem Querschnitt ist in Fig. 7 strichliert angedeutet. Man erkennt, dass die Lagerstifte 4 in die durch den Innenwinkel des L-Profils ausgebildeten Aussparungen eingreifen.

Fig. 8 zeigt eine perspektivische Ansicht eines ersten Laufschaufelelements 10, Fig. 9 eine perspektivische Ansicht eines diesem ersten Laufschaufelelement benachbarten zweiten Laufschaufelelements 20, wobei das zwischen diesen angeordnete Dämpfungselement 5 sowohl in Fig. 8 als auch in Fig. 9 dargestellt ist, um die Lagerung auf dem jeweiligen Lagerstift zu verdeutlichen.

Die Lager- und der Sicherungstift sind, wie insbesondere in den Fig. 5, 6 und 8 erkennbar, freistehend und integral mit der jeweiligen Schaufelhalsaussparung ausgebildet und gehen jeweils in einem Radius in diese über.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichen

- 1: Schaufelblatt
- 10: erstes Laufschaufelelement
- 20: zweites Laufschaufelelement
- 2: Schaufelfuß
- 3: Schaufelhalsaussparung
- 4: erster Lagerstift
- 5: Dämpfungselement
- 51: (erste) Aussparung
- 52: Radialschlitz
- 53: Betriebskontaktfläche
- 54: Zwischenwand
- 6: zweiter Lagerstift
- 7: Sicherungsstift

## Patentansprüche

1. Laufschaufelanordnung für eine Gasturbine, insbesondere eine Verdichter- oder Turbinenstufe einer Flugtriebwerk-Gasturbine, mit wenigstens einem ersten Laufschaufelelement (10) und einem diesem in Umfangsrichtung benachbarten zweiten Laufschaufelelement (20), wobei die benachbarten Laufschaufelelemente jeweils wenigstens ein Schaufelblatt (1) zur Strömungsumlenkung, einen Schaufelfuß (2) zur Befestigung an einem Rotor, sowie einander zugewandte, zwischen Schaufelblatt und Schaufelfuß angeordnete Schaufelhalsaussparungen (3) aufweisen, in denen ein gemeinsames Dämpfungselement (5) beweglich gelagert ist und wobei eine erste Stirnseite des Dämpfungselements eine erste Lageraussparung (51), in die ein erster Lagerstift (4) eingreift, der an der Schaufelhalsaussparung des ersten Laufschaufelelements angeordnet ist, und eine in Umfangsrichtung der Gasturbine gegenüberliegende zweite Stirnseite des Dämpfungselements eine zweite Lageraussparung aufweist, in die ein zweiter Lagerstift (6) eingreift, der an der Schaufelhalsaussparung des zweiten Laufschaufelelements angeordnet ist;
**dadurch gekennzeichnet, dass**
entweder das Dämpfungselement in einem Querschnitt senkrecht zu einer Längsachse des ersten und/oder zweiten Lagerstiftes einen geschlossenen Außenumfang aufweist;
oder dass das Dämpfungselement in einem Querschnitt senkrecht zu einer Längsachse des ersten und/oder zweiten Lagerstiftes einen Radialschlitz aufweist, wobei eine Schlitzweite kleiner als eine maximale Querschnittsbreite wenigstens eines der in die Lageraussparungen eingreifenden Lagerstifte ist.

2. Laufschaufelanordnung nach Anspruch 1, **dadurch gekennzeichnet, dass** die erste und zweite Lageraussparung miteinander zu einer Durchgangsöffnung verbunden sind.

3. Laufschaufelanordnung nach Anspruch 1, **dadurch gekennzeichnet, dass** die erste und zweite Lageraussparung voneinander sacklochartig durch eine Zwischenwand (54) getrennt sind.

4. Laufschaufelanordnung nach einem der vorhergehenden Ansprüche, **dadurch gekennzeichnet, dass** das Dämpfungselement in einem Querschnitt senkrecht zu einer Längsachse des ersten und/oder zweiten Lagerstiftes einen O-förmigen Außenumfang aufweist.

5. Laufschaufelanordnung nach einem der vorhergehenden Ansprüche, **dadurch gekennzeichnet, dass** der Radialschlitz schaufelblatt- oder schaufelfußseitig angeordnet ist.

6. Laufschaufelanordnung nach einem der vorhergehenden Ansprüche, **dadurch gekennzeichnet, dass** das Dämpfungselement durch wenigstens einen Sicherungsstift (7) in Axialrichtung der Gasturbine festgelegt und/oder verdrehgesichert ist, der an der Schaufelhalsaussparung des ersten oder zweiten Laufschaufelelements angeordnet ist.

7. Laufschaufelanordnung nach einem der vorhergehenden Ansprüche, **dadurch gekennzeichnet, dass** der erste und zweite Lagerstifte, wenigstens im Wesentlichen, parallel zueinander sind, insbesondere miteinander fluchten.

8. Laufschaufelanordnung nach einem der vorhergehenden Ansprüche, **dadurch gekennzeichnet, dass** das Dämpfungselement in Radialrichtung der Gasturbine mit einem Radialspiel (r) auf dem ersten und/oder zweiten Lagerstift gelagert ist, das größer oder kleiner ist als ein Radialspiel (R) zwischen einer schaufelblattseitigen Außenseite des Dämpfungselements und einer gegenüberliegenden Innenwandung der ersten und/oder zweiten Schaufelhalsaussparung.

9. Laufschaufelanordnung nach einem der vorhergehenden Ansprüche, **dadurch gekennzeichnet, dass** eine Betriebskontaktfläche (53) der ersten und/oder zweiten Lageraussparung zum Kontaktieren einer Betriebskontaktfläche des in diese Lageraussparung eingreifenden Lagerstiftes in Eingriffsrichtung gesehen in Radialrichtung der Gasturbine nach außen, insbesondere linear, ansteigt.

10. Laufschaufelanordnung nach einem der vorhergehenden Ansprüche, **dadurch gekennzeichnet, dass** wenigstens einer der Stifte freistehend und/oder integral mit der Schaufelhalsaussparung ausgebildet ist und/oder in einem Radius in diese übergeht.

11. Gasturbine, insbesondere Flugtriebwerk-Gasturbine, mit wenigstens einer Laufschaufelanordnung nach einem der vorhergehenden Ansprüche, **dadurch gekennzeichnet, dass** das erste und zweite Laufschaufelelement an einem Rotor der Gasturbine, insbesondere lösbar, befestigt ist.

12. Verfahren zur Montage einer Laufschaufelanordnung nach dem vorhergehenden Anspruch, **dadurch gekennzeichnet, dass** das Dämpfungselement beweglich auf dem ersten und/oder zweiten Lagerstift gelagert und das erste und zweite Laufschaufelelement an einem Rotor der Gasturbine, insbesondere lösbar, befestigt werden.

## Claims

1. Rotor blade arrangement for a gas turbine, particularly a compression or turbine stage of an aircraft engine gas turbine, with at least one first rotor blade element (10) and a second rotor blade element (20) adjacent thereto in the circumferential direction, wherein the adjacent rotor blade elements each have at least one airfoil (1) for flow deflection, one blade root (2) for mounting on a rotor, as well as blade neck recesses (3) facing one another and arranged between airfoil and blade root in which a common damping element (5) is displaceably supported and wherein a first front side of the damping element has a first bearing recess (51) into which a first bearing pin (4) engages that is arranged on the blade neck recess of the first rotor blade element, and a second front side of the damping element opposite the gas turbine in the circumferential direction has a second bearing recess into which a second bearing pin (6) engages that is arranged on the blade neck recess of the second rotor blade element;
**characterized in that**
either the damping element has a closed outer periphery in a cross section perpendicular to a longitudinal axis of the first and/or second bearing pin,
or the damping element has a radial slot in a cross section perpendicular to a longitudinal axis of the first and/or second bearing pin, in which case a slot width is smaller than a maximum cross-sectional width of at least one of the bearing pins engaging in the bearing recesses.

2. The rotor blade arrangement as set forth in claim 1, **characterized in that** the first and second bearing recesses are interconnected by a through hole.

3. The rotor blade arrangement as set forth in claim 1, **characterized in that** the first and second bearing recesses are separated from one another in the manner of a blind hole by a partition wall (54).

4. The rotor blade arrangement as set forth in any one of the preceding claims, **characterized in that** the damping element has an O-shaped outer periphery in a cross section perpendicular to a longitudinal axis of the first and/or second bearing pin.

5. The rotor blade arrangement as set forth in any one of the preceding claims, **characterized in that** the radial slot is arranged on the airfoil or blade root side.

6. The rotor blade arrangement as set forth in any one of the preceding claims, **characterized in that** the damping element is fixed in the axial direction of the gas turbine and/or secured against rotating by at least one locking pin (7) that is arranged on the blade neck recess of the first or second rotor blade element.

7. The rotor blade arrangement as set forth in any one of the preceding claims, **characterized in that** the first and second bearing pins are at least substantially parallel to one another, particularly flush with one another.

8. The rotor blade arrangement as set forth in any one of the preceding claims, **characterized in that** the damping element is supported in the radial direction of the gas turbine with a radial clearance (r) on the first and/or second bearing pin that is greater or less than a radial clearance (R) between an airfoil-side outer side of the damping element and an opposing inner wall of the first and/or second blade neck recess.

9. The rotor blade arrangement as set forth in any one of the preceding claims, **characterized in that**, when seen in the direction of engagement in the radial direction of the gas turbine, an operating contact surface (53) of the first and/or second bearing recess for contacting an operating contact surface of the bearing pin engaging in this bearing recess rises outwardly, particularly linearly.

10. The rotor blade arrangement as set forth in any one of the preceding claims, **characterized in that** at least one of the pins is embodied so as to be freestanding and/or integral with the blade neck recess and/or transitions into same in a radius.

11. A gas turbine, particularly an aircraft engine gas turbine, with at least one rotor blade arrangement as set forth in any one of the preceding claims, **characterized in that** the first and second rotor blade element is attached, particularly detachably, to a rotor of the gas turbine.

12. A method for installing a rotor blade arrangement as set forth in the preceding claim, **characterized in that** the damping element is supported displaceably on the first and/or second bearing pin and the first and second rotor blade elements are attached, particularly detachably, to a rotor of the gas turbine.

## Revendications

1. Agencement d'aubes mobiles pour une turbine à gaz, en particulier pour un étage de compresseur ou de turbine d'une turbine à gaz d'un groupe motopropulseur, ayant au moins un premier élément d'aube mobile (10) et un second élément d'aube mobile (20) voisin de celui-ci dans la direction circonférentielle, dans lequel les éléments d'aubes mobiles adjacents présentent respectivement au moins une aube de pale (1) pour dévier l'écoulement, une emplanture de pale (2) pour fixer à un rotor, ainsi que des cavités de resserrement de pales (3), dans lesquelles un élément d'amortissement commun (5) est monté mobile, et dans lequel une première face avant de l'élément d'amortissement présente une première cavité de palier (51), dans laquelle s'engage une première tige de palier (4), qui est agencée dans la cavité de resserrement de pale du premier élément d'aube mobile, et une seconde face avant de l'élément d'amortissement opposée dans la direction circonférentielle de la turbine à gaz présente une seconde cavité de palier, dans laquelle s'engage une seconde tige de palier (6), qui est agencée dans la cavité de resserrement de pale de la seconde aube mobile; **caractérisé en ce que** :
l'élément d'amortissement présente en section transversale perpendiculairement à un axe longitudinal de la première et/ou de la seconde tige d'amortissement une circonférence externe fermée ;
ou l'élément d'amortissement présente en section transversale perpendiculairement à un axe longitudinal de la première et/ou de la seconde tige de palier une fente radiale, dans lequel une largeur de fente est plus petite qu'une largeur maximale de section transversale d'au moins l'une des tiges de palier s'engageant dans les cavités de palier.

2. Agencement d'aubes mobiles selon la revendication 1, **caractérisé en ce que** la première et la seconde cavité de palier sont reliées l'une à l'autre par une ouverture de passage.

3. Agencement d'aubes mobiles selon la revendication 1, **caractérisé en ce que** la première et la seconde cavité de palier sont séparées l'une de l'autre en forme de trou borgne par une paroi intermédiaire (54).

4. Agencement d'aubes mobiles selon l'une quelconque des revendications précédentes, **caractérisé en ce que** l'élément d'amortissement présente en section transversale perpendiculairement à un axe longitudinal de la première et/ou de la seconde tige de palier une circonférence externe en forme de O.

5. Agencement d'aubes mobiles selon l'une quelconque des revendications précédentes, **caractérisé en ce que** la fente radiale est agencée côté aube de pale ou côté emplanture de pale.

6. Agencement d'aubes mobiles selon l'une quelconque des revendications précédentes, **caractérisé en ce que** l'élément d'amortissement est fixé et/ou bloqué en rotation dans la direction axiale de la turbine à gaz par au moins une tige de fixation (7), qui est agencée sur la cavité de resserrement de pale des premier et second éléments d'aubes mobiles.

7. Agencement d'aubes mobiles selon l'une quelconque des revendications précédentes, **caractérisé en ce que** la première et la seconde tige de palier s'alignent au moins sensiblement parallèlement l'une à l'autre, en particulier l'une avec l'autre.

8. Agencement d'aubes mobiles selon l'une quelconque des revendications précédentes, **caractérisé en ce que** l'élément d'amortissement est monté dans la direction radiale de la turbine à gaz avec un jeu radial (r) sur les première et/ou la seconde tige de palier, lequel jeu est supérieur ou inférieur à un jeu radial (R) entre le côté externe côté aube de pale de l'élément d'amortissement et une paroi interne opposée de la première et/ou la seconde cavité de desserrement de pale.

9. Agencement d'aubes mobiles selon l'une quelconque des revendications précédentes, **caractérisé en ce qu'**une surface de contact de fonctionnement (53) de la première et/ou la seconde cavité de palier pour la mise en contact d'une surface de contact de la tige de palier s'engageant dans cette cavité de palier en observant dans le sens d'engagement dans la direction radiale de la turbine à gaz vers l'extérieur, en particulier de manière linéaire.

10. Agencement d'aubes mobiles selon l'une quelconque des revendications précédentes, **caractérisé en ce qu'**au moins l'une des tiges est conçue de manière autonome et/ou d'un seul tenant avec la cavité de resserrement de pale et/ou se fond dans un rayon de celle-ci.

11. Turbine à gaz, en particulier turbine à gaz d'un groupe motopropulseur, ayant au moins un agencement d'aubes mobiles selon l'une quelconque des revendications précédentes, **caractérisée en ce que** le premier et le second élément d'aube mobile sont fixés sur un rotor de la turbine à gaz, en particulier de manière amovible.

12. Procédé de montage d'un agencement d'aubes mobiles selon la revendication précédente, **caractérisé en ce que** l'élément d'amortissement est monté mobile sur la première et/ou la seconde tige de palier et le premier et le second élément d'aube mobile sont fixés sur un rotor de la turbine à gaz, en particulier de manière amovible.
